# EUROPEAN PATENT APPLICATION

(11) **EP 1 107 562 A1**
(43) Date of publication of application: **13.06.2001**
(21) Application number: 99440340.0
(22) Date of filing: 02.12.1999
(51) Int. Cl.: H04M 15/00

(54) **An Internet-aided method of setting up a telephone call**

(71) Applicant: ALCATEL, 75008 Paris (FR)
(72) Inventor: Lunn, Peter, 70839 Gerlingen (DE); Brogné, Nicolas, 78530 Buc (FR)
(74) Representative: Brose, Gerhard, Dipl.-Ing.

(57) **Abstract**

The invention relates to an internet-aided method of setting up a telephone call.

According to the invention, the method consists in accessing thanks to a terminal connected to a data communication network to a server providing internet-aided set-up services.

In particular, the terminal provides the server with a calling party identifier and a called party identifier. The server retrieves from a database at least one possible communication path to set up a connection between the calling and the called party and communicates it to the terminal. One communication path is selected at the terminal which generates a signal containing a dialing information depending on the selected communication path and on the called party. This signal is directed to a call control unit located in the calling party telephone or in an exchange of the telephone network which automatically sets up the call between the calling party and the called party using the selected communication path.

## Description

This invention relates to the field of telecommunications, and more precisely to services offered by data communication networks, like Internet, to telephone network users. The invention deals inter alia with an internet-aided method of setting up a telephone call.

A telephone call between a calling party and a called party is supported by a communication path. In the description below, the term communication path relates to characteristics which determine univocally a telephone call between the calling party and the called party. One characteristic may be the service provider chosen by the calling party to set up the telephone call, another characteristic may be the connection type chosen to support the call requiring a certain voice quality or accepting a certain occupation rate. A communication path is associated with a telephone rate charged for the telephone call. In a deregulated telecommunication market, a telephone network user is confronted with a choice between a large number of communication paths while setting up a telephone call. Some users are looking toward using least-costs connections, others may be looking toward using high quality connections and so on.

A common criterion to choose a communication path in order to set up a telephone call, is least-cost routing. A prior art method uses a least-cost unit connected to the telephone. The least-cost unit searches the communication path having the lowest telephone rate to reach the called party in tables stored at the least-cost unit. The tables contain cost information associated with a preselection number of the corresponding service provider. The tables may be manually stored in the least-cost unit or downloaded from an external source. When a calling party dials the directory number of the called party, this directory number is forwarded to the least-cost unit which retrieves the service provider providing the lowest telephone rate. The least-cost unit appends the directory number of the called party to the preselection number of the appropriate service provider and automatically sends this dialing information toward the telephone network.

A disadvantage of this method is that the information stored in the tables may be very soon out of date since the user is responsible for updating them. Another disadvantage is that the least-cost unit does not make any compromise choice. It chooses the cheapest service provider whose communication paths are likely to be congested or of bad quality.

A particular object of the present invention is to give up to date information on relevant communication paths to telephone network users looking forward calling a called party.

This object, and others that appear below, is achieved by a method according to claim 1, by a server according to claim 5, by a terminal according to claim 8.

The present invention relates to an internet-aided method of setting up a telephone call between a calling party and a called party. This method requires a terminal able to connect to a data communication network, in particular to Internet, as well as a call control unit in the telephone network. The terminal sends a message containing a calling party identifier and a called party identifier to a server over the data communication network. The server retrieves at least one possible communication path and sends a response signal containing information on the retrieved communication paths to the terminal which can select one communication path and send a signal to the call control unit in order to set up a telephone call using the selected communication path.

An advantage of the present invention is that the server is a centralized unit which can access up to date information on communication paths. The calling party has no more to care about updating tables.

Another advantage of the invention is that the selection of a communication path is made at the terminal. As a consequence an automatic selection according to a criterion predefined by the calling party may be done. The calling party may also select himself the communication path he wants to use.

Another advantage of the invention is that the service is not part of a telecom exchange owned and handled by one network operator, who may be reluctant to promote offers from competitors.

Other characteristics and advantages of the invention will appear on reading the following description of a preferred implementation given by way of non-limiting illustration, and from the accompanying drawings, in which:
Figure 1 shows a system supporting a first embodiment of an internet aided method for setting up a telephone call according to the invention;
Figure 2 shows a system supporting a second embodiment of an internet aided method for setting up a telephone call according to the invention.

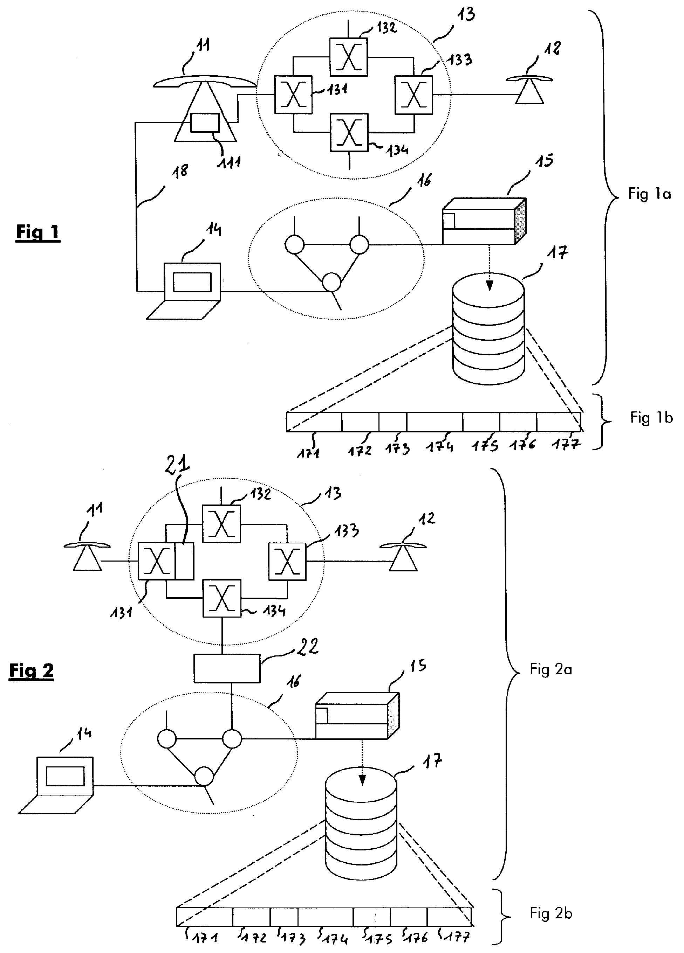

Figure 1 illustrates a system comprising a calling party 11 and a called party 12 both connected to a telephone network 13. The telephone network 13 comprises two communication paths to set up a connection between calling party 11 and called party 12. One communication path is supported by the exchanges 131, 132, 133 the other by the exchanges 131, 134, 133. The calling party 11 is connected to a terminal 14 with a cable 18. Terminal 14 is a personal computer. The cable 18 is connected between a serial interface of the terminal 14 and a V24 entry of the telephone of the calling party 11. A call control unit 111 is located in the telephone of the calling party 11. Terminal 14 is able to connect over a data communication network 16 to a server 15. The means of connection to the data communication network may be an Ethernet based Local Area Network. Terminal 14 is equipped with a browser to access WebPages stored at the server 15. Server 15 supports an internet-aided call set-up features and is able to access a database 17 containing information related to communications paths in the telephone network 13.

A database entry of database 17 related to a communication path comprises a field 171 containing the name of a service provider, a field 172 containing a preselection number, a field 173 containing a telephone rate, a field 174 containing the time period during which the telephone rate is applicable, a field 175 containing the geographical area in which the calling party is located, a field 176 containing the geographical area in which the called party is located and a field 177 containing an indication on the quality of the communication path. Some other fields or on the contrary just a restricted part of the above listed fields may be comprised in a database entry of database 17.

A WebPage comprising a user interface to the internet-aided call set-up features is stored at server 15 and can be accessed by terminal 14 when addressing the WebPage through the browser. The user interface enables the user of terminal 14 to enter the directory number of the calling party 11 and the directory number of the called party 12.

Terminal 14 sends to server 15 over data communication network 16 a message containing a directory number of the calling party and a directory number of the called party. Server 15 extracts from the directory numbers parameters compatible with database fields. If, for example, the field 176 containing the geographical area in which the called party is located requires a country, server 15 has to extract a country information from the called party directory. Server 15 builds a database query using the parameters extracted from the message received from terminal 14 and submits the query to the database 17. The data query also takes into account common information available at server 15 just as the date, the time at which the query is submitted. Some service provider charge different telephone rates depending on the time (for example night rate) and on the date (for example Christmas rate).

The results of the query contains information related to several possible communication paths between the calling party 11 and the called party 12. Information on one communication path may be the name of the service provider, the preselection number of the service provider, the telephone rate and the communication path quality. The results of the query are formatted by server 15 according to an appropriate format for example html and sent back into the browser of terminal 14.

In a preferred embodiment of the invention, the directory number of the calling party and of the called party sent by terminal 14 to server 15 is replaced by the name of the calling party and the name of the called party. Server 15 converts the names in directory numbers by accessing to an electronic phone book. If several directory numbers are found under the same name, server 15 sends extended information on the different possibilities to terminal 14. This extended information contain, for example, the name, surname, address so that the calling party can select the appropriate possibility and communicate it to server 15 which determines the related directory number.

In another preferred embodiment of the invention, the server 15 sends a list of possible communication paths to the terminal 14. The number of proposed communication paths in the list should not exceed a predefined number, for example a default number stored at server 15 or a number contained in the message sent by terminal 14. The browser at terminal 14 displays the list of possible communication paths according to the sent format. The user of terminal 14 selects one of the possible communication paths over a user interface. For example the user selects with a mouse a case sensitive area associated to one of the possible communication paths. A selection through a keyboard or a through a voice recognition system are also possible.

Server 15 downloads a computer program to terminal 14 over data communication network 16 to handle information related to communication paths. The computer program is preferably a java applet downloaded on terminal 14 each time terminal 14 access to server 15 in order to use the internet-aided call set-up service. Alternatively, the computer program is downloaded once or installed on terminal 14 by means of CD-ROM or floppy disk and remains resident at terminal 14.

In a preferred embodiment of the invention, the message sent from terminal 14 to server 15 also contains a selection criterion enabling server 15 to arrange the possible communication paths according to the selection criterion. The computer program at terminal 14 controls automatically the selection and for example selects the first possible communication path in the list.

After the selection has been done, the computer program at terminal 14 controls the generation of a signal containing dialing information and sends it over cable 18 to the call control unit 111. The signal makes the control unit care for hook off and for dialing the received dialing information. The dialing information is constituted of a preselection number related to the selected communication path followed by the directory number of called party 12. The preselection number is attached to the case sensitive area selected by the user or retrieved by the terminal 14 from the query results in case of automatic selection.

The invention also applies if terminal 14 is connected to the data communication network 16 with ISDN, one B-channel may be used for the telephone call and the other B-channel for the connection to server 15 or if terminal 14 is connected over an analogue telephone line to the data communication network 16, the terminal 14 should then release the connection to server 15 after the communication path has been selected so that the telephone line becomes available for dialing the number associated to the communication path and setting up a telephone call to the called party 12.

In a particular embodiment of the invention, terminal 14 and called party 11 are combined in a unique apparatus comprising the functionality of connecting to a data communication network over a telephone network and the functionality of a telephone. An example for such an apparatus is the WebTouch™ One.

In another embodiment of the internet-aided call set up showed on figure 2, the calling party 11 and the terminal 14 should not be physically connected. In that case, a call control unit 21 has to be located in the exchange 131 of the telephone network 13 or part of a PABX. The data communication network 16 should be interconnected by means of a gateway 22 with the telephone network 13. The signal sent by the terminal 14 should consist in a message sent through the data communication network 16 and routed toward the exchange 131 or PABX containing the call control unit 21. The call control unit 21 should set up the connection between the calling and the called party according to the dialing information contained in the message.

## Claims

1. A method of setting up a telephone call between a calling party and a called party, said method comprising the step of connecting a terminal associated to said calling party to a data communication network and to a call control unit, said method being characterized by further comprising the steps of:
- providing, by said terminal, to a server over said data communication network, a message containing at least an identifier of said calling party and an identifier of said called party; and
- retrieving, by said server, information on at least one possible communication path to establish said telephone call between said calling party and said called party;
- sending, by said server, a response signal including information on said possible communication paths to said terminal;
- selecting, at said terminal, one communication path to establish said telephone call; and
- sending, by said terminal, a signal to a call control unit, to set up said telephone call, said signal containing a dialing information associated to said selected communication path.

2. A method according to claim 1, characterized in that said information on a communication path contains an identifier of the service provider supporting said communication path and a telephone rate related to said communication path.

3. A method according to claim 1, characterized in that said dialing information includes the preselection number of said service provider and the directory number of said called party.

4. A method according to claim 1, characterized in that said terminal also transmits to said server a selection criterion according to which said server arranges said retrieved communication paths.

5. A server to be connected to a data communication network, said server addressing a database containing communication path information, said server being characterized in that it comprises also:
- means for converting a calling party identifier and a called party identifier in database compatible parameters;
- means for retrieving at least one possible communication path to set up a call between said calling party and said called party; and
- means for sending a message over said communication data network including information on said possible communication paths.

6. A server according to claim 5, characterized in that it also comprises:
- means for downloading a computer program to a terminal associated with a calling party, said computer program dedicated to process said message including information on said possible communication paths.

7. A server according to claim 5, characterized in that it also comprises:
- means for receiving a selection criterion;
- means for using said selection criterion to arrange said retrieved communication paths.

8. A terminal associated with a calling party willing to set up a telephone call with a called party, said terminal controlling a call control unit, said terminal being able to connect to a data communication network, characterized in that it comprises:
- means for sending a first message containing a calling party identifier and a called party identifier to a server over said data communication network;
- means for processing a second message containing information on at least one possible communication path to set up a telephone call between said calling party and said called party; and
- means for selecting one of said possible communication paths;
- means for sending a signal containing a dialing information associated to said selected communication path to said call control unit.

9. A terminal according to claim 8, characterized in that it is a personal computer, said personal computer being connected to an external telephone containing said call control unit.

10. A terminal according to claim 8, characterized in that it contains said call control unit, said terminal being able to set up a telephone call and to connect to a data communication network.
